# EUROPEAN PATENT APPLICATION

(11) **EP 2 629 545 A1**
(43) Date of publication of application: **21.08.2013**
(21) Application number: 13152321.9
(22) Date of filing: 23.01.2013
(51) Int. Cl.: H04N 21/485

(54) **Apparatus and method for changing attribute of subtitle in image display device**

(30) Priority: 15.02.2012 KR 20120015384
(71) Applicant: Samsung Electronics Co., Ltd, Gyeonggi-do 443-742 (KR)
(72) Inventor: Cho, Jin-Kyung, Seoul (KR); Ju, Hee-Jin, Gyeonggi-do (KR)
(74) Representative: Jenkins, Richard Gavin

(57) **Abstract**

An apparatus and a method for changing an attribute of a subtitle in an image display device having a touchscreen are provided. The method includes reproducing moving picture contents, when a subtitle corresponding to the moving picture contents that are being reproduced exists, displaying a subtitle corresponding to the moving picture contents, and when a touch for a region on which the subtitle is displayed exists, changing an attribute of the subtitle depending on the touch information.

## Description

### BACKGROUND OF THE INVENTION

### 1. Field of the Invention:

The present invention relates to an apparatus and a method for displaying a subtitle in an image display device. More particularly, the present invention relates to an apparatus and a method for changing an attribute of a subtitle in an image display device.

### 2. Description of the Related Art:

A portable electronic device has evolved into a multimedia communication apparatus that provides a data transmission service and various additional services as well as a voice communication service. For example, the portable electronic device provides, in addition to a voice communication service, a music reproducing service, a message service, a camera service, an image reproduce service, and the like..

In a case of reproducing a moving picture, the portable electronic device displays the moving picture and a subtitle reproduced when needed on a display unit. For example, the portable electronic device displays a subtitle on a partial region of the display unit on which a moving picture is displayed depending on a subtitle attribute set in advance.

If a user of the portable electronic device changes a subtitle attribute, the user of the portable electronic device is inconvenienced by having to reconfigure a subtitle file and change a subtitle attribute using a subtitle attribute change menu. For example, in the case of changing a subtitle attribute while reproducing a moving picture, the user of the portable electronic device is inconvenienced by having to pause the moving picture that is being reproduced and change the subtitle attribute using a subtitle attribute change menu.

Therefore, a need exists for a user interface which enables changing of a subtitle attribute in a portable electronic device with ease.

The above information is presented as background information only to assist with an understanding of the present disclosure. No determination has been made, and no assertion is made, as to whether any of the above might be applicable as prior art with regard to the present invention.

### SUMMARY OF THE INVENTION

Aspects of the present invention are to address at least the above-mentioned problems and/or disadvantages and to provide at least the advantages described below. Accordingly, an aspect of the present invention is to provide an apparatus and a method for changing a subtitle attribute in an image display device.

Another aspect of the present invention is to provide an apparatus and a method for changing a subtitle attribute while reproducing a moving picture in an image display device.

Still another aspect of the present invention is to provide an apparatus and a method for changing a subtitle attribute depending on touch event occurrence information while reproducing a moving picture in an image display device.

Yet another aspect of the present invention is to provide an apparatus and a method for changing a subtitle size depending on touch event occurrence information while reproducing a moving picture in an image display device.

Yet further another aspect of the present invention is to provide an apparatus and a method for changing a position of a subtitle depending on touch event occurrence information while reproducing a moving picture in an image display device.

In accordance with an aspect of the present invention, a method for changing a subtitle attribute in an image display device having a touchscreen is provided. The method includes reproducing moving picture contents, when a subtitle corresponding to the moving picture contents that are being reproduced exists, displaying the subtitle corresponding to the moving picture contents, and when a touch for a region on which the subtitle has been displayed exists, changing an attribute of the subtitle depending on the touch information.

In accordance with another aspect of the present invention, a method for changing a subtitle position in an image display device having a touchscreen is provided. The method includes reproducing moving picture contents, when a subtitle corresponding to the moving picture contents that are being reproduced exists, displaying the subtitle corresponding to the moving picture contents, and when a touch for a region on which the subtitle has been displayed exists, changing a position of the subtitle depending on the touch information.

In accordance with another aspect of the present invention, an apparatus for changing a subtitle attribute in an image display device is provided. The apparatus includes a touchscreen, a controller for reproducing moving picture contents, for displaying a subtitle corresponding to the moving picture contents, and when a touch for a region on which the subtitle has been displayed is detected, for changing an attribute of the subtitle depending on the touch information, and a display unit for displaying the moving picture contents and the subtitle.

In accordance with another aspect of the present invention, an apparatus for changing a subtitle position in an image display device is provided. The apparatus includes a touchscreen, a controller for reproducing moving picture contents, for displaying a subtitle corresponding to the moving picture contents, and when a touch input for a subtitle display region is detected, for changing a position of the displayed subtitle depending on the touch input, and a display unit for displaying the moving picture contents and the subtitle.

Other aspects, advantages and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:

FIG. 1 is a block diagram illustrating an image display device according to an exemplary embodiment of the present invention;

FIG. 2 is a flowchart illustrating a procedure for changing a subtitle attribute in an image display device according to an exemplary embodiment of the present invention;

FIGs. 3A through 3C illustrate screen configurations for changing a font of a subtitle in an image display device according to exemplary embodiments of the present invention;

FIG. 4 is a flowchart illustrating a procedure for changing a subtitle size in an image display device according to an exemplary embodiment of the present invention;

FIGs. 5A through 5D illustrate screen configurations for changing a subtitle size in an image display device according to exemplary embodiments of the present invention;

FIG. 6 is a flowchart illustrating a procedure for changing a subtitle size in an image display device according to an exemplary embodiment of the present invention;

FIGs. 7A through 7D illustrate screen configurations for changing a subtitle size in an image display device according to exemplary embodiments of the present invention;

FIG. 8 is a flowchart illustrating a procedure for changing a subtitle position in an image display device according to an exemplary embodiment of the present invention; and

FIGs. 9A through 9D illustrate screen configurations for changing a subtitle position in an image display device according to exemplary embodiments of the present invention.

Throughout the drawings, like reference numerals will be understood to refer to like parts, components and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

Exemplary embodiments of the present invention provide a technology for changing a subtitle attribute while reproducing a moving picture in an image display device.

In the following description, an image display device includes a mobile communication terminal, a Personal Digital Assistant (PDA), a laptop computer, a desktop computer, a smart phone, a netbook, a Mobile Internet Device (MID), an Ultra Mobile Personal Computer (UMPC), a tablet PC, a navigation unit, a Motion Picture Expert Group (MPEG-1 or MPEG-2) Audio Layer-3 (MP3) player, a smart Television (TV), and the like, that can reproduce a moving picture.

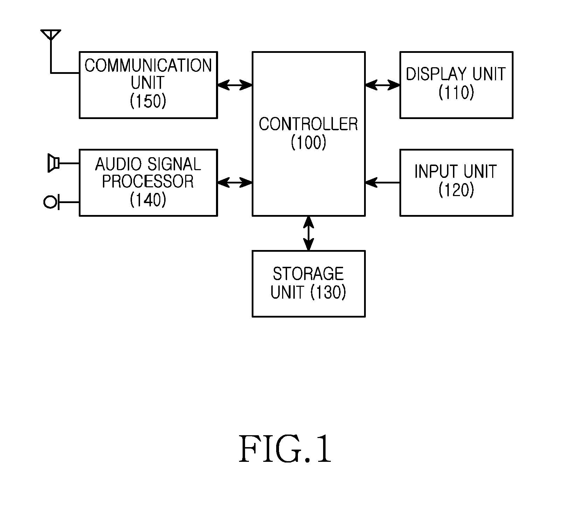

FIGs. 1 through 9D, discussed below, and the various exemplary embodiments used to describe the principles of the present disclosure in this patent document are by way of illustration only and should not be construed in any way that would limit the scope of the disclosure. Those skilled in the art will understand that the principles of the present disclosure may be implemented in any suitably arranged communications system. The terms used to describe various embodiments are exemplary. It should be understood that these are provided to merely aid the understanding of the description, and that their use and definitions in no way limit the scope of the invention. Terms first, second, and the like are used to differentiate between objects having the same terminology and are in no way intended to represent a chronological order, unless where explicitly stated otherwise. A set is defined as a non-empty set including at least one element.

FIG. 1 is a block diagram illustrating an image display device according to an exemplary embodiment of the present invention. In the following description, it is assumed that the image display device includes a communication unit for transmitting/receiving a signal.

Referring to FIG. 1, the image display device includes a controller 100, a display unit 110, an input unit 120, a storage unit 130, an audio signal processor 140, and a communication unit 150.

The controller 100 controls an overall operation of the image display device. Specifically, the controller 100 controls reproduction of moving image contents. If a subtitle file for moving picture contents exists, the controller 100 displays a subtitle together with the moving picture contents on the display unit 110.

In addition, the controller 100 may change a subtitle attribute depending on touch information detected during reproduction of a moving picture. For example, in a case of detecting a tap for a subtitle region while reproducing a moving picture, the controller 100 changes a subtitle attribute. The subtitle attribute may include a subtitle color, a font, a subtitle opacity, a language of a subtitle, a subtitle size, and the like. In addition, a tap denotes a series of operations in which a user touches a touchscreen and immediately releases the touch.

In a case of detecting a multi-touch for a subtitle region while reproducing a moving picture, the controller 100 may change a subtitle size with consideration of a change in an interval between multi-touches.

In a case where a touch for a subtitle region is maintained for more than a reference time while a moving picture is reproduced, the controller 100 activates a subtitle size change mode. Thereafter, in the case of detecting a tap, the controller 100 may change a subtitle size with consideration of a tap point.

In the case where a touch for a subtitle region is maintained for more than the reference time while a moving picture is reproduced, the controller 100 activates a subtitle size change mode. Thereafter, in a case of detecting a drag, the controller 100 may change a subtitle size with consideration of a drag distance.

In the case where a touch for a subtitle region is maintained for more than the reference time while a moving picture is reproduced, the controller 100 activates a subtitle position change mode. Thereafter, in the case of detecting a drag, the controller 100 may change a subtitle position depending on drag information.

The display unit 110 displays status information of the image display device, a character input by a user, a moving picture, a still picture, and the like, under control of the controller 100. For example, the display unit 110 displays a moving picture and a subtitle under control of the controller 100. Thereafter, the display unit 110 may change a subtitle attribute and a subtitle position under control of the controller 100.

If the display unit 110 is configured using a touchscreen, the display unit 110 provides input data detected via a touch pad to the controller 100.

The input unit 120 provides input data generated by the user's selection to the controller 100. For example, the input unit 120 includes only a control button for controlling the image display device. In another example, the input unit 120 may include a keypad for receiving input data from the user.

The storage unit 130 may include a program storage unit for storing a program for controlling an operation of the image display device, and a data storage unit for storing data occurring during execution of a program. For example, the storage unit 130 stores subtitle attribute information to be changed when a subtitle attribute change event occurs under control of the controller 100. In another example, the storage unit 130 may store a program for changing subtitle attribute information. In this case, the controller 100 may execute a program for changing the subtitle attribute information stored in the storage unit 130 to change the subtitle attribute information.

The audio signal processor 140 controls an input/output of an audio signal. For example, the audio signal processor 140 transmits an audio signal provided from the controller 100 to the outside via a speaker, and provides an audio signal provided from a microphone to the controller 100.

The communication unit 150 processes a signal transmitted/received via an antenna.

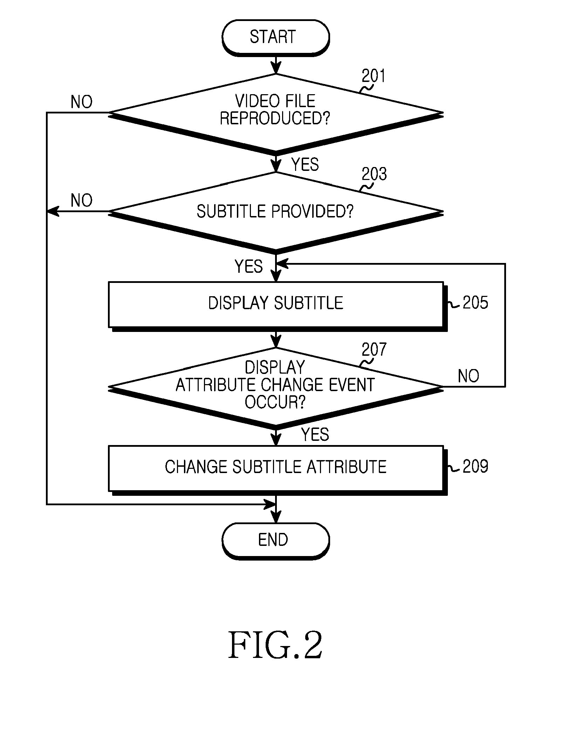

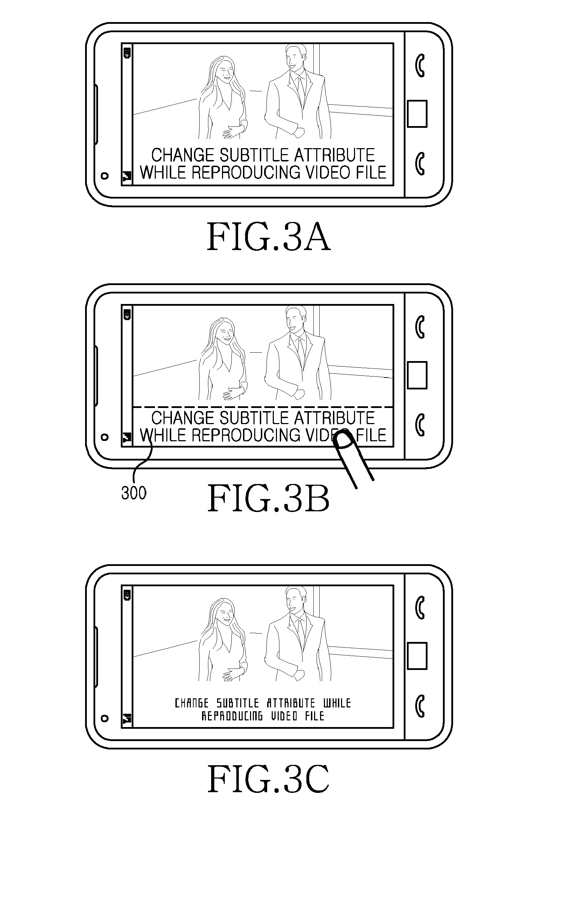

FIG. 2 illustrates a procedure for changing a subtitle attribute in an image display device according to an exemplary embodiment of the present invention. FIGs. 3A through 3C illustrate screen configurations for changing a font of a subtitle in an image display device according to exemplary embodiments of the present invention.

Referring to FIGs. 2 through 3C, the image display device determines whether to reproduce a video file in step 201. For example, the image display device determines whether a video file to be reproduced is selected by a user's manipulation.

In a case of not reproducing the video file, the image display device ends the present algorithm.

In contrast, in a case of reproducing the video file, the image display device proceeds to step 203 to determine whether to provide a subtitle. For example, the image display device determines whether a subtitle corresponding to the video file exists. In another example, the image display device determines whether a subtitle file to be executed by the user's manipulation is selected.

In a case of not providing the subtitle, the image display device ends the present algorithm.

In contrast, in a case of providing the subtitle, the image display device proceeds to step 205 to display subtitle information on a partial region of an image that is being reproduced. For example, the image display device displays the subtitle information on a partial region of a lower end of the image that is being reproduced as illustrated in FIG. 3A.

Thereafter, the image display device proceeds to step 207 to determine whether an attribute change event occurs. For example, the image display device determines whether a tap for a subtitle region 300 is detected as illustrated in FIG. 3B.

When the attribute change event does not occur, the image display device proceeds to step 205 to display the subtitle information on a partial region of the image that is being reproduced. For example, the image display device maintains subtitle display for the image that is being reproduced.

In contrast, when the attribute change event occurs, the image display device proceeds to step 209 to change a subtitle attribute. At this point, the image display device changes a subtitle attribute according to a predefined attribute change sequence. For example, in a case where a font of a subtitle is set to change in the order of "clear gothic">"samul che">"dotum che" depending on an attribute change event, the image display device changes a subtitle displayed using "clear gothic" as illustrated in FIG. 3B to "samul che" as illustrated in FIG. 3C according to a tap for the subtitle region. In another example, in a case where a subtitle color is set to change in the order of "white">"black">"yellow" depending on an attribute change event, the image display device may change a subtitle of "white" to "black" according to a tap for the subtitle region. Thereafter, the image display device ends the present algorithm.

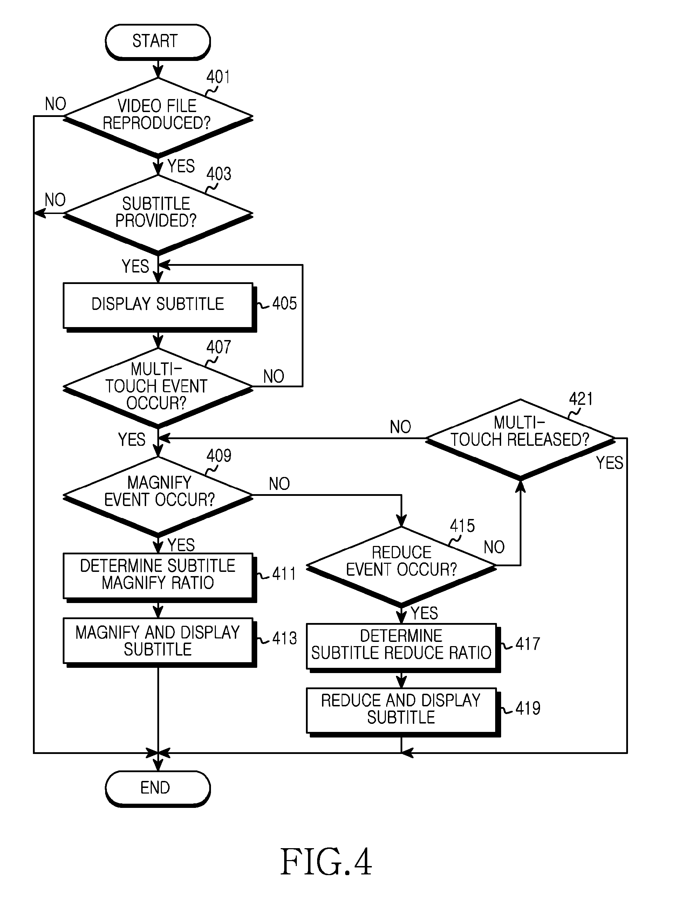

As described above, the image display device changes a subtitle attribute depending on an attribute change event. At this point, the image display device may change a subtitle size using a multi-touch as illustrated in FIG. 4.

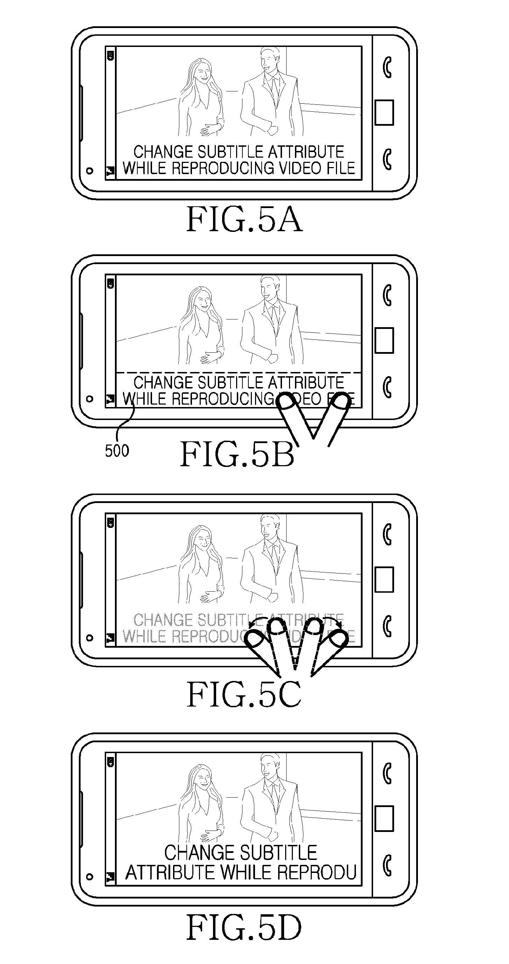

FIG. 4 illustrates a procedure for changing a subtitle size in an image display device according to an exemplary embodiment of the present invention. FIGs. 5A through 5D illustrate screen configurations for changing a subtitle size in an image display device according to exemplary embodiments of the present invention.

Referring to FIGs. 4 through 5D, the image display device determines whether to reproduce a video file in step 401. For example, the image display device determines whether a video file to be reproduced is selected by a user's manipulation.

In a case of not reproducing the video file, the image display device ends the present algorithm.

In contrast, in a case of reproducing the video file, the image display device proceeds to step 403 to determine whether to provide a subtitle. For example, the image display device determines whether a subtitle file corresponding to the video file to be reproduced exists. In another example, the image display device determines whether a subtitle file to be executed is selected by the user's manipulation.

In a case of not providing a subtitle, the image display device ends the present algorithm.

In contrast, in a case of providing the subtitle, the image display device proceeds to step 405 to display subtitle information on a partial region of an image that is being reproduced. For example, the image display device displays subtitle information on a partial region of a lower end of the image that is being reproduced as illustrated in FIG. 5A.

Thereafter, the image display device proceeds to step 407 to determine whether a multi-touch event occurs. For example, the image display device determines whether a multi-touch for a subtitle region 500 is detected as illustrated in FIG. 5B.

When the multi-touch event does not occur, the image display device proceeds to step 405 to display subtitle information on a partial region of the image that is being reproduced. For example, the image display device maintains subtitle display for the image that is being reproduced.

In contrast, when the multi-touch event occurs, the image display device proceeds to step 409 to determine whether a magnify event occurs. For example, the image display device determines whether an interval between multi-touch points widens as illustrated in FIG. 5C.

When the interval between the multi-touch points widens, the image display device recognizes that a magnify event has occurred. Accordingly, the image display device proceeds to step 411 to determine a subtitle magnify ratio with consideration of the interval change of the multi-touch points.

Thereafter, the image display device proceeds to step 413 to magnify and display a font size of a subtitle depending on the subtitle magnify ratio. For example, the image display device magnifies and displays a font size of a subtitle depending on the subtitle magnify ratio as illustrated in FIG. 5D.

In contrast, when the magnify event does not occur, the image display device proceeds to step 415 to determine whether a reduce event occurs. For example, the image display device determines whether an interval between multi-touch points narrows.

When the interval between the multi-touch points narrows, the image display device recognizes that a reduce event occurs. Accordingly, the image display device proceeds to step 417 to determine a subtitle reduce ratio with consideration of the interval change of the multi-touch points.

The image display device then proceeds to step 419 to reduce and display a font size of a subtitle depending on the subtitle reduce ratio.

In contrast, when a reduce event does not occur, the image display device proceeds to step 421 to determine whether a multi-touch is released.

When the multi-touch is not released, the image display device proceeds to step 409 to determine whether a magnify event occurs.

In contrast, when the multi-touch is released, the image display device ends the present algorithm.

In the above exemplary embodiment of the present invention, the image display device changes a subtitle size with consideration of multi-touch information for a subtitle region.

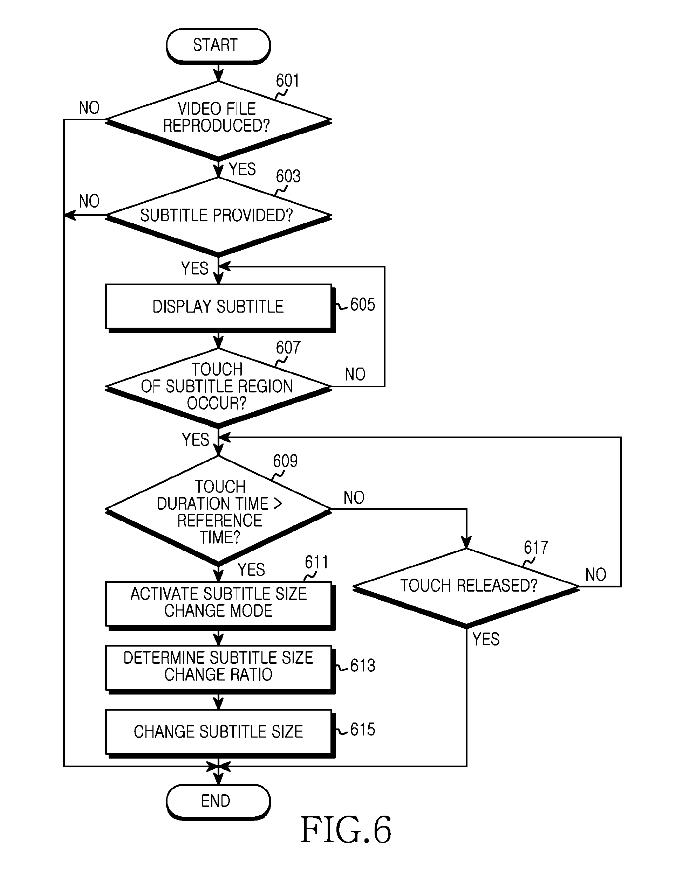

In another exemplary embodiment of the present invention, the image display device may change a subtitle size using single touch information as illustrated in FIG. 6.

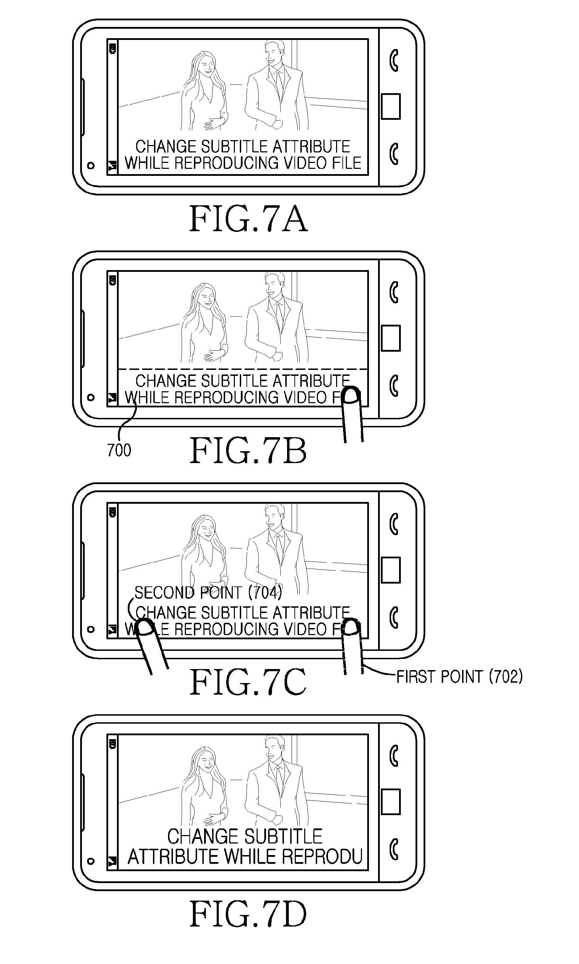

FIG. 6 is a flowchart illustrating a procedure for changing a subtitle size in an image display device according to an exemplary embodiment of the present invention. FIGs. 7A through 7D illustrate screen configurations for changing a subtitle size in an image display device according to exemplary embodiments of the present invention.

Referring to FIGs. 6 through 7D, the image display device determines whether to reproduce a video file. For example, the image display device determines whether a video file to be reproduced is selected by a user's manipulation.

In a case of not reproducing the video file, the image display device ends the present algorithm.

In contrast, in a case of reproducing the video file, the image display device proceeds to step 603 to determine whether to provide a subtitle. For example, the image display device determines whether a subtitle file corresponding to the video file to be reproduced exists. In another example, the image display device determines whether a subtitle file to be executed is selected by the user's manipulation.

In a case of not providing the subtitle, the image display device ends the present algorithm.

In contrast, in a case of providing the subtitle, the image display device proceeds to step 605 to display subtitle information on a partial region of an image that is being reproduced. For example, the image display device displays subtitle information on a partial region of a lower end of the image that is being reproduced as illustrated in FIG. 7A.

Thereafter, the image display device proceeds to step 607 to determine whether a touch event for a subtitle region occurs. For example, the image display device determines whether a touch for a subtitle region 700 is detected as illustrated in FIG. 7B.

When the touch event does not occur, the image display device proceeds to step 605 to display subtitle information on a partial region of the image that is being reproduced. For example, the image display device maintains the subtitle display for the image that is being reproduced.

In contrast, when the touch event occurs, the image display device proceeds to step 609 to compare a touch duration time of the subtitle region with a reference time. For example, the image display device determines whether the touch duration time of the subtitle region is greater than the reference time.

If the touch duration time is greater than the reference time, the image display device proceeds to step 611 to activate a subtitle size change mode. At this point, the image display device may display a display region with a shadow in order to represent activate information of the subtitle size change mode. In addition, the image display device continuously reproduces a video file even when the subtitle size change mode is activated.

The image display device then proceeds to step 613 to determine a subtitle size change ratio. For example, as illustrated in FIG. 7C, the image display device determines the subtitle size change ratio with consideration of a distance between a first touch point 702 for activating the subtitle size change mode and a second touch point 704 detected after the subtitle size change mode has been activated. In another example, the image display device may activate the subtitle size change mode and determine the subtitle size change ratio with consideration of a drag distance from the first touch point 702.

After determining the subtitle size change ratio, the image display device proceeds to step 615 to change and display a font size of the subtitle depending on the subtitle size change ratio. For example, the image display device magnifies and displays a font size of the subtitle depending on the subtitle size change ratio as illustrated in FIG. 7D.

In contrast, if the touch duration time of the subtitle region is less than the reference time, the image display device proceeds to step 617 to determine whether the touch is released.

When the touch is not released, the image display device proceeds to step 609 to compare the touch duration time with the reference time.

In contrast, when the touch is released, the image display device ends the present algorithm.

Hereinafter, an exemplary method for changing a position of a subtitle in an image display device is described.

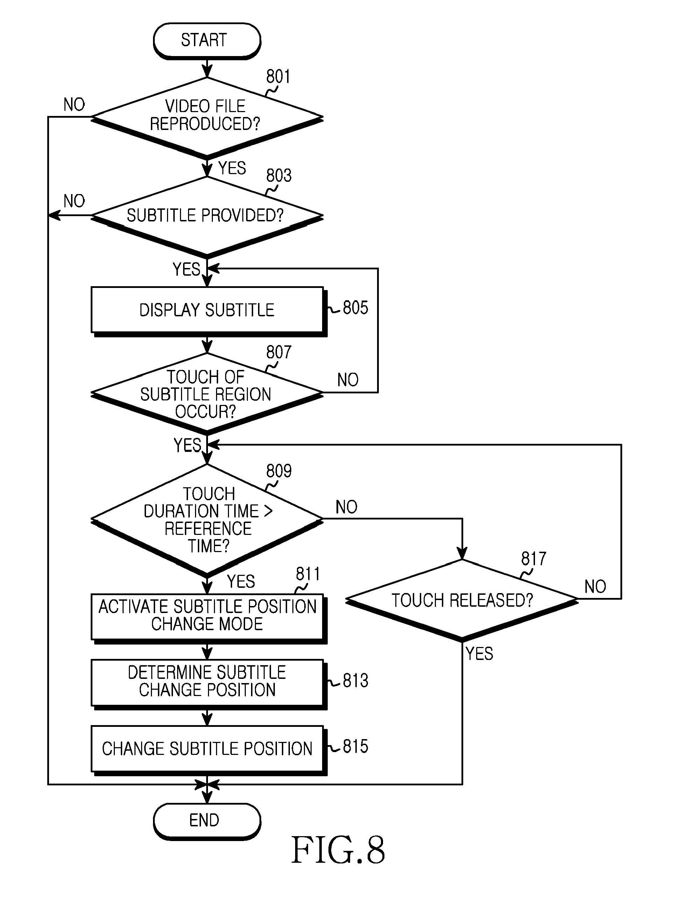

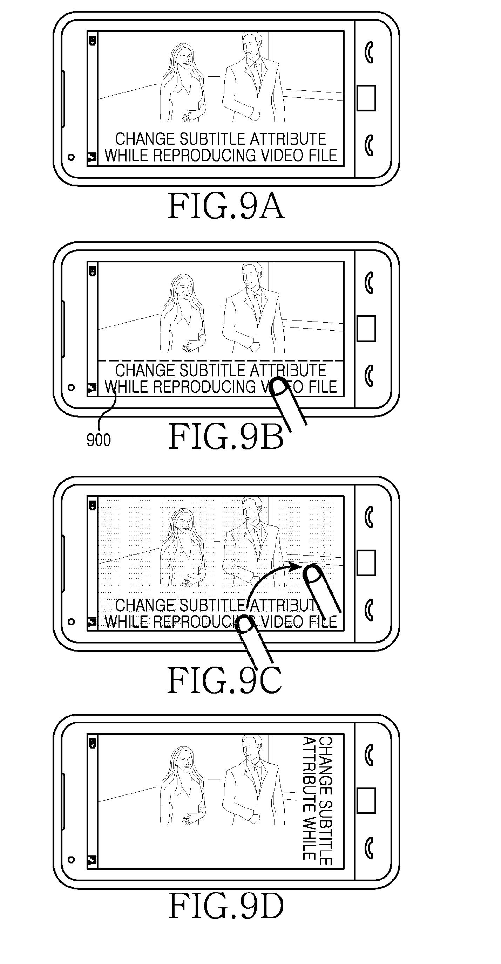

FIG. 8 illustrates a procedure for changing a subtitle position in an image display device according to an exemplary embodiment of the present invention. FIGs. 9A through 9D illustrate screen configurations for changing a subtitle position in an image display device according to exemplary embodiments of the present invention.

Referring to FIGs. 8 through 9D, the image display device determines whether to reproduce a video file in step 801. For example, the image display device determines whether a video file to be reproduced is selected by a user's manipulation.

In a case of not reproducing a video file, the image display device ends the present algorithm.

In contrast, in a case of reproducing the video file, the image display device proceeds to step 803 to determine whether to provide a subtitle. For example, the image display device determines whether a subtitle file corresponding to the video file to be reproduced exists. In another example, the image display device determines whether a subtitle file to be executed is selected by the user's manipulation.

In a case of not providing the subtitle, the image display device ends the present algorithm.

In contrast, in a case of providing the subtitle, the image display device proceeds to step 805 to display subtitle information on a partial region of an image that is being reproduced. For example, the image display device displays the subtitle information on a partial region of a lower end of the image that is being reproduced as illustrated in FIG. 9A.

Thereafter, the image display device proceeds to step 807 to determine whether a touch event for a subtitle region occurs. For example, the image display device determines whether the touch for the subtitle region 900 is detected as illustrated in FIG. 9B.

If the touch event does not occur, the image display device proceeds to step 805 to display the subtitle information on a partial region of the image that is being reproduced. For example, the image display device maintains the subtitle display for the image that is being reproduced.

In contrast, if the touch event occurs, the image display device proceeds to step 809 to compare a touch duration time with a reference time. For example, the image display device determines whether the touch duration time of the subtitle region is greater than the reference time.

If the touch duration time is greater than the reference time, the image display device proceeds to step 811 to activate a subtitle position change mode. At this point, the image display device may display a display region with a shadow in order to represent activate information of the subtitle position change mode. In addition, the image display device continuously reproduces the video file even when the subtitle position change mode is activated.

The image display device then proceeds to step 813 to determine a change position of the subtitle. For example, after activating the subtitle position change mode, the image display device recognizes a detected tap point as a change position of the subtitle. In another example, after activating the subtitle position change mode, the image display device may recognize a detected drag end point as a change position of the subtitle as illustrated in FIG. 9C.

After determining the change position of the subtitle, the image display device proceeds to step 815 to change the subtitle position to the change position of the subtitle and display the same. For example, the image display device changes the subtitle to the right side of the display region as illustrated in FIG. 9D.

In contrast, if the touch duration time is less than the reference time, the image display device proceeds to step 817 to determine whether the touch for the subtitle region is released.

If the touch is not released, the image display device proceeds to step 809 to compare the touch duration time with the reference time.

In contrast, if the touch is released, the image display device ends the present algorithm.

It will be appreciated that exemplary embodiments of the present invention, according to the claims and description in the specification, can be realized in the form of hardware, software or a combination of hardware and software. Any such software may be stored in a non-transient computer readable storage medium. The computer readable storage medium stores one or more programs (i.e., software modules), the one or more programs comprising instructions, which when executed by one or more processors in an electronic device, cause the electronic device to perform an exemplary method of the present invention. Any such software may be stored in the form of a volatile or a non-volatile storage unit, such as a storage device like a Read Only Memory (ROM), which may be erasable or rewritable, or in the form of memory, such as a Random Access Memory (RAM), memory chips, device or integrated circuits, or on an optically or magnetically readable medium, such as a Compact Disc (CD), a Digital Video Disc (DVD), a magnetic disk, a magnetic tape, or the like. It will be appreciated that the storage devices and storage media are exemplary embodiments of machine-readable storage units that are suitable for storing a program or programs comprising instructions that, when executed, implement exemplary embodiments of the present invention. Accordingly, exemplary embodiments provide a program comprising code for implementing an apparatus or a method as claimed in any one of the claims of this specification and a machine-readable storage unit for storing such a program. Furthermore, such programs may be conveyed electronically via any medium, such as a communication signal carried over a wired or wireless connection, and exemplary embodiments suitably encompass the same.

As described above, the image display device can easily change a subtitle attribute without stopping a moving picture that is being reproduced by changing the subtitle attribute depending on touch information detected while reproducing the moving picture.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A method for changing a subtitle attribute in an image display device, the method comprising:
reproducing moving picture contents;
when a subtitle corresponding to the moving picture contents that are being reproduced exists, displaying the subtitle corresponding to the moving picture contents; and
when a touch for a region on which the subtitle has been displayed exists, changing an attribute of the subtitle depending on the touch information.

2. The method of claim 1, wherein the attribute of the subtitle comprises at least one of a subtitle size, a font color of the subtitle, a font of the subtitle, a language of the subtitle, a position of the subtitle, and an opacity of the subtitle.

3. The method of claim 1, wherein the changing of the attribute of the subtitle comprises:
when a multi-touch for a region on which the subtitle has been displayed is detected during reproduction of the moving picture contents, determining a change ratio with consideration of an interval change between multi-touch points; and
changing a size of the displayed subtitle depending on the change ratio.

4. The method of claim 1, wherein the changing of the attribute of the subtitle comprises:
when a first touch for a region on which the subtitle has been displayed is detected during reproduction of the moving picture contents, activating a subtitle attribute change mode with consideration of a touch duration time of the first touch;
when a second touch is detected, determining a change ratio with consideration of a second touch point; and
changing a size of the displayed subtitle with consideration of the change ratio.

5. The method of claim 1, wherein the changing of the attribute of the subtitle comprises:
when a first touch for a region on which the subtitle has been displayed is detected during reproduction of the moving picture contents, activating a subtitle attribute change mode with consideration of a touch duration time of the first touch;
when a drag is detected from a first touch point, determining a change ratio with consideration of a drag length; and
changing a size of the displayed subtitle with consideration of the change ratio.

6. The method of claim 1, wherein the changing of the attribute of the subtitle comprises:
when a touch for a region on which the subtitle has been displayed is detected during reproduction of the moving picture contents, determining a predefined subtitle attribute change sequence; and
changing the attribute of the displayed subtitle according to the subtitle attribute change sequence.

7. The method of claim 1, wherein the region on which the subtitle has been displayed comprises a portion of a display region on which the moving picture contents have been displayed.

8. An image display device, the device comprising:
a touchscreen;
a controller for reproducing moving picture contents, for displaying a subtitle corresponding to the moving picture contents, and when a touch for a region on which the subtitle has been displayed is detected, for changing an attribute of the subtitle depending on the touch information; and
a display unit for displaying the moving picture contents and the subtitle.

9. The device of claim 8, wherein the attribute of the subtitle comprises at least one of a subtitle size, a font color of the subtitle, a font of the subtitle, a language of the subtitle, a position of the subtitle, and an opacity of the subtitle.

10. The device of claim 8, wherein when a multi-touch for a region on which the subtitle has been displayed is detected during reproduction of the moving picture contents, the controller changes a size of the subtitle displayed on the display unit with consideration of a change ratio that depends on an interval change between multi-touch points.

11. The device of claim 8, wherein when a first touch for a region on which the subtitle has been displayed is detected during reproduction of the moving picture contents, the controller activates a subtitle attribute change mode with consideration of a touch duration time of the first touch, and when a second touch is detected, changes a size of the subtitle displayed on the display unit with consideration of a change ratio that depends on a second touch point.

12. The device of claim 8, wherein when a first touch for a region on which the subtitle has been displayed is detected during reproduction of the moving picture contents, the controller activates a subtitle attribute change mode with consideration of a touch duration time of the first touch, and when a drag is detected from a first touch point, changes a size of the subtitle displayed on the display unit with consideration of a change ratio that depends on a drag length.

13. The device of claim 8, wherein when a touch for a region on which the subtitle has been displayed is detected during reproduction of the moving picture contents, the controller changes the attribute of the subtitle displayed on the display unit according to a predefined subtitle attribute change sequence.

14. The device of claim 8, wherein the region on which the subtitle has been displayed comprises a portion of a display region on which the moving picture contents have been displayed.
